# EUROPÄISCHE PATENTSCHRIFT

(11) **EP 2 735 394 B1**
(45) Veröffentlichungstag und Bekanntmachung des Hinweises auf die Patenterteilung: **24.12.2014**
(21) Anmeldenummer: 12008424.9
(22) Anmeldetag: 19.12.2012
(51) Int. Cl.: B23K 9/18, B23K 9/028

(54) **Schweißkopf einer Unterpulverschweißanlage und Unterpulverschweißanlage mit einem solchen Schweißkopf**
Welding head of a submerged arc welding assembly and submerged arc welding assembly with such a welding head
Tête de soudage d'une installation de soudage sous poudre et installation de soudage sous poudre dotée d'une telle tête de soudage

(43) Veröffentlichungstag der Anmeldung: 28.05.2014
(73) Patentinhaber: Richter Maschinenfabrik AG, 37235 Hessisch Lichtenau (DE)
(72) Erfinder: Richter, Axel, 37235 Hessisch Lichtenau (DE)
(74) Vertreter: Walther, Walther & Hinz GbR

(56) Entgegenhaltungen:
- BE-A- 561 906
- DE-A1- 3 430 349
- DE-U1- 7 925 662
- JP-A- H07 148 576
- US-A- 5 536 913
- US-A1- 2005 167 468

## Beschreibung

Die Erfindung betrifft einerseits einen Schweißkopf einer Unterpulverschweißanlage umfassend eine Drahtzuführeinrichtung und eine damit verbundene Pulverbeschickungseinrichtung sowie andererseits eine Unterpulverschweißanlage umfassend ein Gestell mit einem vertikal verfahrbaren, horizontal ausgerichteten Arm mit einem solchen Schweißkopf.

Unterpulverschweißanlagen sind hinreichend bekannt. Mit solchen bekannten Unterpulverschweißanlagen werden üblicherweise V- oder X-förmige Schweißnähte bei Blechen großer Stärke aufgefüllt. Bekannt ist in diesem Zusammenhang, dass mit Hilfe solcher Unterpulverschweißanlagen im Wesentlichen ausschließlich gerade verlaufende Nähte geschweißt werden können. Nun sind allerdings auch Einsatzgebiete bekannt, bei denen solche V- oder X-Nähte einen kurvenförmigen Verlauf in der Ebene aufweisen. Derartige Nähte werden heute mit Hand verschweißt, was zum einen sehr zeitaufwendig ist, und zum anderen, insbesondere wenn sehr lange Nähte geschweißt werden müssen, erhebliche Gefahren hinsichtlich einer möglichen Lunkerbildung in der Schweißnaht aufgrund nachlassender Achtsamkeit des Schweißers einerseits, und wenn Schweißelektroden verwendet werden, beim Elektrodenwechsel mit sich bringen. Insofern ist das Unterpulverschweißen mit kontinuierlich nachlaufendem Draht ein Schweißverfahren, das insbesondere wenn es automatisiert abläuft zu einer Schweißnaht hoher Schweißgüte führt.

Wesentlich beim Unterpulverschweißen ist, dass das Aufschmelzen des Drahtes in jedem Fall unter der Pulverschicht erfolgt. Insofern ist beim automatisierten Unterpulverschweißen mit einer Unterpulverschweißanlage vorgesehen, dass vor der eigentlichen Drahtzuführeinrichtung in Schweißrichtung gesehen die Pulverzuführung erfolgt. Das heißt, dass einige wenige Zentimeter bevor der Draht der Drahtzuführeinrichtung in Kontakt mit dem zu schweißenden Blech gelangt, durch die Pulverbeschickungseinrichtung die Zufuhr des Pulvers örtlich vor der aktuellen Schweißstelle gewährleistet ist.

Aus der BE 561906 ist eine Unterpulverschweißeinrichtung bekannt, bei der die Position der Pulverbeschickungseirrichtung relativ zum Schweißkopf Verstellbar ist, um die Dicke der aufgebrachten Pulverschicht zu steuern.

Aus der US 5,536,913 A ist eine Unterpulverschweißeinrichtung bekannt, bei der die Drahtzuführung horizontal und vertikal verschwenkbar am Schweißkopf befestigt ist. Hiermit kann die Neigung der Drahtzufuhr beeinflusst werden, um beispielsweise eine Schweißnaht auch in Hinterschnitten anzubringen. Die Pulverbeschickungseinrichtung ist hierbei mit der Drahtzuführeinrichtung derart verbunden, dass bei Verschwenken der Drahtzuführeinrichtung auch die Pulverzuführleitung mit verschwenkt wird.

Um nun beim Unterpulverschweißen von kurvenförmigen Nähten zu gewährleisten, dass sich die Pulverbeschickungseinrichtung immer in Richtung der Schweißnaht genau vor der Drahtzuführeinrichtung befindet wird erfindungsgemäß vorgeschlagen, dass die Pulverbeschickungseinrichtung relativ zu der Drahtzuführeinrichtung um die Drahtzuführeinrichtung herum verfahrbar am Schweißkopf angeordnet ist. Hierdurch wird erreicht, dass die Pulverbeschickungseinrichtung in der Lage ist der Drahtzuführeinrichtung in Richtung des Verlaufs der Schweißnaht durch Änderung ihrer Stellung relativ zur Drahtzuführeinrichtung vorzueilen und örtlich vor dem Draht das Pulver in die Naht zu leiten.

Vorteilhafte Merkmale und Ausgestaltungen der Erfindung ergeben sich aus den Unteransprüchen.

So ist vorteilhaft vorgesehen, dass die Drahtzuführeinrichtung ein Drahtzuführrohr aufweist, wobei die Pulverbeschickungseinrichtung auf dem Drahtzuführrohr verdrehbar gelagert ist. Hieraus wird deutlich, dass das Drahtzuführrohr als Träger für die Pulverbeschickungseinrichtung dient, wobei die Pulverbeschickungseinrichtung auf dem Drahtzuführrohr, das üblicherweise für die Stromversorgung des Schweißdrahtes bestromt ist, verdrehbar gelagert ist.

Als besonders vorteilhafte Ausgestaltung hat sich herausgestellt, wenn die Pulverbeschickungseinrichtung konzentrisch zu dem Drahtzuführrohr der Drahtzuführeinrichtung einen ringförmigen, auf dem Drahtzuführrohr verdrehbar angeordneten Pulverbehälter aufweist, der eine Pulvereintrittsstutzen und ein Pulverauslaufrohr aufweist, wobei das Pulverauslaufrohr neben dem Drahtzuführrohr verläuft. Das Pulverauslaufrohr endet vorteilhaft unmittelbar über der Schweißnaht; es erstreckt sich mit seiner Länge insofern im Wesentlichen bis zum schweißseitigen Ende des Drahtzuführrohres. Es wurde bereits darauf hingewiesen, dass das Drahtzuführrohr bestromt ist. Insofern ist vorteilhaft der Pulverbehälter mit dem Drahtzuführrohr durch eine elektrisch isolierende Hülse verbunden, wobei vorteilhaft die Hülse an dem Pulverbehälter befestigt ist, so dass sich die Hülse mit dem Pulverbehälter relativ zum Drahtzuführrohr auf dessen Umfang verdrehen kann.

Zur Drehung des Pulverbehälters ist eine Antriebseinrichtung, insbesondere als Riementrieb vorgesehen. Hierbei befindet sich an der Hülse, die den Pulverbehälter aufnimmt, ein Antriebsriemenrad, das als Teil der Antriebseinrichtung für die Drehbewegung des Pulverbehälters der Pulverbeschickungseinrichtung auf dem Drahtzuführrohr sorgt.

Nach einem weiteren Merkmal der Erfindung weist die Pulverbeschickungseinrichtung eine Absperreinrichtung für das Pulver auf, die vorteilhaft einen in einem Schiebergehäuse gelagerten Schieber umfasst, der vorteilhaft mit Druckluft gesteuert ist. Zur Steuerung des Schiebers in dem Schiebergehäuse ist zum Öffnen und Verschleißen des Durchtritts für das Pulver ein entsprechender pneumatischer Schwenkantrieb vorgesehen. Die Pulverbeschickungseinrichtung weist darüber hinaus eine Laserabstandsmesseinrichtung auf. Diese Laserabstandsmesseinrichtung dient der Höheneinstellung des Schweißkopfes an einer vertikal ausgerichteten Führung, die später beschrieben wird. Die Laserabstandsmesseinrichtung bestimmt den Abstand zum Nahtgrund. Die Laserabstandsmesseinrichtung steht darüber hinaus mit der ebenfalls später beschriebenen Steuerung in Verbindung.

Gegenstand der Erfindung ist jedenfalls eine Unterpulverschweißanlage umfassend ein Gestell mit einem vertikal verfahrbaren, horizontal ausgerichteten Arm, wobei sich die Unterpulverschweißanlage erfindungsgemäß dadurch auszeichnet, dass durch den Arm der Schweißkopf gemäß mindestens einem der Ansprüche 1 bis 10 entlang der Längsachse des Armes beweglich und hier insbesondere teleskopierbar aufnehmbar ist. Der insbesondere teleskopierbare Arm selbst ist darüber hinaus verschwenkbar an dem Gestell angeordnet, so dass mit dem Arm der Schweißkopf an jeder beliebigen Stelle über einem Schweißtisch positioniert werden kann. Im Einzelnen ist für die Positionierung des Schweißkopfes am Ende des Armes über einem Schweißtisch vorgesehen, dass der Schweißkopf durch den Arm horizontal quer zur Längsachse des Armes und vertikal verfahrbar aufgenommen ist. Insbesondere zeichnet sich ein Führungsgestell zur vertikalen und horizontalen Verfahrbarkeit des Schweißkopfes relativ zum Arm dadurch aus, dass zwei Schienen vorgesehen sind, die im rechten Winkel zueinander stehen, wobei die horizontal verlaufende Schiene quer zur Längsachse des Armes verläuft.

Nach einem besonders vorteilhaften Merkmal weist die Unterpulveranlage eine programmierbare Steuerung auf, wobei durch die Steuerung nicht nur die Bewegung des Schweißkopfes in horizontaler und vertikaler Richtung entsprechend der Kontur der Schweißnaht steuerbar ist, sondern auch die Drehbewegung der Pulverbeschickungseinrichtung um die Drahtzuführeinrichtung derart, dass in Richtung der Schweißnaht die Pulverbeschickungseinrichtung sich vor der Drahtzuführeinrichtung befindet. Im Einzelnen ist in diesem Zusammenhang vorgesehen, dass durch die programmierbare Steuerung über die Antriebseinrichtung der Pulverbehälter auf dem Drahtzuführrohr verdreht wird. Das heißt, dass die Steuerung nicht nur für die Verdrehung des Pulverbehälters, und dementsprechend nicht nur für die Stellung des Pulverauslaufrohres relativ zum Drahtzuführrohr sorgt, sondern durch die Steuerung wird darüber hinaus natürlich auch das Verfahren des Drahtzuführrohres der Drahtzuführeinrichtung als Teil des Schweißkopfes entlang der Naht vorgenommen.

Anhand der Zeichnungen wird die Erfindung nachstehend beispielhaft näher erläutert.
- Fig. 1: zeigt das Gestell der Unterpulverschweißanlage als schematische Darstellung in einer perspektivischen Ansicht;
- Fig. 2: zeigt den Schweißkopf im Schnitt mit der Antriebseinrichtung für den ringförmigen Pulverbehälter.

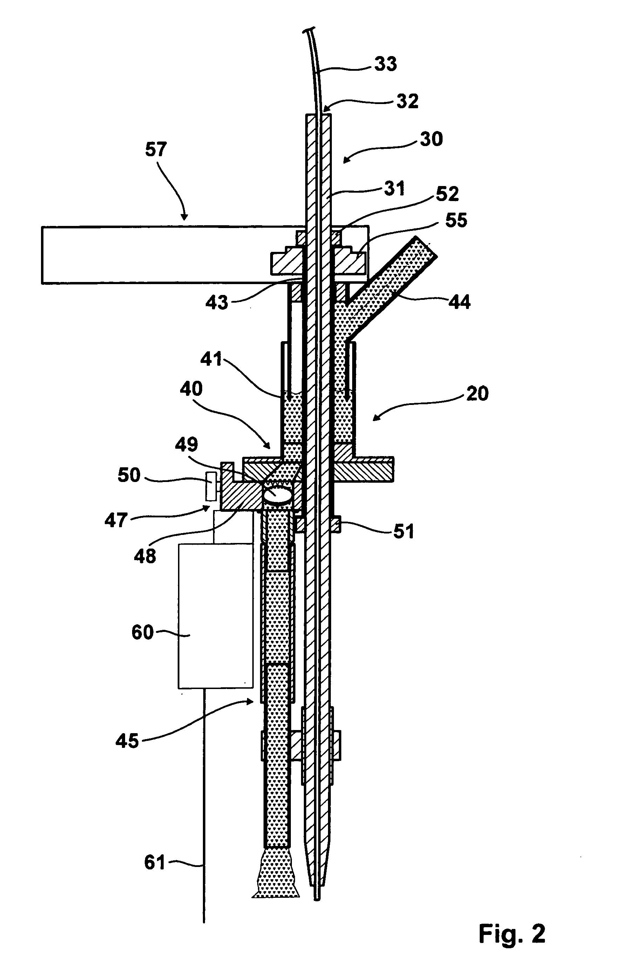

Das insgesamt mit 1 bezeichnete Gestell weist die vertikale Stütze 2 auf, an der ein Schlitten 3 vertikal verfahrbar angeordnet ist. Der Schlitten 3 nimmt darüber hinaus den Arm 4 auf, wobei zwischen dem Arm 4 und dem Schlitten 3 ein vertikales Gelenk 5 vorgesehen ist, so dass der Arm horizontal verschwenkbar durch den Schlitten aufgenommen ist. Der teleskopierbare Arm weist endseitig eine horizontal, quer zur Längsachse des Arms 4 verlaufende Schienenführung 8 auf, die eine weitere Schienenführung 9 horizontal verschieblich aufnimmt (Pfeil 10), wobei die Führung 9 der vertikal verschieblichen Aufnahme des Schweißkopfes 20 dient. Der Schweißkopf 20 umfasst die Drahtzuführeinrichtung 30 mit dem Drahtzuführrohr 31 sowie die Pulverbeschickungseinrichtung 40 (Fig. 2). Die Drahtzuführeinrichtung 30 zeigt in der Darstellung gemäß Fig. 2 lediglich das Drahtzuführrohr 31 ohne die dazugehörige Drahthaspel. Auf dem Drahtzuführrohr 31, das bestromt ist und das zentrisch einen Durchlass 32 für den Draht 33 aufweist, befindet sich der ringförmige Pulverbehälter 41 der Pulverbeschickungseinrichtung 40. Es wurde bereits darauf hingewiesen, dass das Drahtzuführrohr 31 bestromt ist. Insofern ist auf dem Drahtzuführrohr 31 im Bereich des ringförmigen Pulverbehälters 41 eine Hülse 43 vorgesehen, die aus einem elektrisch nicht leitenden Material besteht, z. B. einem Kunststoff, und die mit dem ringförmigen Pulverbehälter 41 in Verbindung steht. Der ringförmige Pulverbehälter 41 besitzt einen Pulvereinlassstutzen 44 und ein Pulverauslassrohr 45, wobei das Pulverauslassrohr 45 neben dem Drahtzuführrohr 31 verläuft. Während demzufolge der Pulverbehälter 41 konzentrisch zu dem Drahtzuführrohr 31 angeordnet ist, befindet sich das Pulverauslassrohr neben dem Drahtzuführrohr. Im Übergang von dem Pulverbehälter 41 zu dem Pulverauslassrohr 45 ist eine Absperreinrichtung 47 für das Pulver vorgesehen. Die Absperreinrichtung 47 umfasst ein Schiebergehäuse 48 mit einem Schieber 49, wobei der Schieber 49 durch den pneumatischen Schwenkantrieb 50 betätigbar ist.

Die Hülse 43, die isolierend den Pulverbehälter 41 gegenüber dem Drahtzuführrohr 31 aufnimmt, ist auf dem Drahtzuführrohr 31 durch die beiden Manschetten 51, 52 gehalten. Auf der Hülse 43 befindet sich vorzugsweise am oberen Ende ein Antriebsriemenrad 55, das als Teil der Antriebseinrichtung 57 mit einem nicht dargestellten Motor der Drehbewegung der Hülse 43 und damit des Pulverbehälters 41 um das Drahtzuführrohr 31 herum dient. Der Verdrehwinkel des Pulverbehälters auf dem Drahtzuführrohr kann 360° oder mehr betragen.

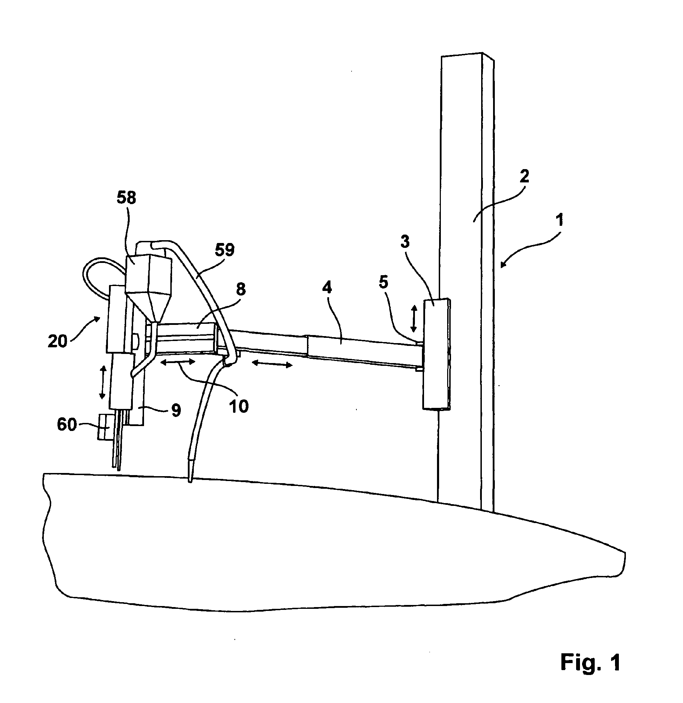

Betrachtet man nunmehr noch einmal die Fig. 1, so erkennt man an dem Pulvereinlassstutzen 44 den Behälter 58, der mithilfe einer Saugeinrichtung 59 das nicht verbrauchte Pulver absaugt, in dem Behälter 58 zwischenspeichert und sodann wieder einer erneuten Verwendung durch die Pulverbeschickungseinrichtung zuführt.

Für die horizontale und vertikale Bewegung des Schweißkopfes und damit des Drahtzuführrohres sind die beiden Schienenführungen 8 und 9 (Fig. 1) vorgesehen. Die Schienenführung 8 ist horizontal und quer zur Längsachse des Armes 4 ausgerichtet, wohingegen die Führung 9 es ermöglicht die den Schweißkopf in vertikaler Richtung zu verfahren. In Verbindung mit der Teleskopierbarkeit des Armes 4 kann somit der Schweißkopf 20 in der Ebene sowohl in X- als auch in Y-Richtung verfahren werden, und somit einer beliebigen Nahtkontur folgen. Die vertikale Verstellung des Schweißkopfes wird erforderlich, wenn nach und nach die Naht mit Schweißgut aufgefüllt wird. Zur Bestimmung des Abstandes des Drahtzuführrohres zum Nahtgrund dient die Laserabstandsmesseinrichtung 60 mit dem Laserstrahl 61. Diese Laserabstandsmesseinrichtung 60 ist gekoppelt mit der Pulverbeschickungseinrichtung 40. Das heißt, bei Bewegung der Pulverbeschickungseinrichtung relativ zum Drahtzuführrohr, wird auch die Laserabstandsmesseinrichtung 60 entsprechend bewegt. Die Laserabstandsmesseinrichtung ist im vorliegenden Fall an dem Schiebergehäuse 48 befestigt, wobei die Befestigung derart ist, dass der Laserstrahl 61 beim Verfahren des Schweißkopfes dem Pulverauslassrohr um einige Zentimeter voreilt. Somit verläuft der Laserstrahl 61 parallel und mit Abstand sowohl zum Drahtzuführrohr als auch zum Pulverauslassrohr.

### Bezugszeichenliste:

- 1: Gestell
- 2: vertikale Stütze
- 3: Schlitten
- 4: Arm
- 5: Gelenk
- 8: Schienenführung (horizontal)
- 9: Schienenführung (vertikal)
- 20: Schweißkopf
- 30: Drahtzuführeinrichtung
- 31: Drahtzuführrohr
- 32: Durchlass
- 33: Draht
- 40: Pulverbeschickungseinrichtung
- 41: Pulverbehälter
- 43: Hülse (elektrisch nicht leitend)
- 44: Pulvereinlassstutzen
- 45: Pulverauslassrohr
- 47: Absperreinrichtung
- 48: Schiebergehäuse
- 49: Schieber
- 50: pneumatischer Schwenkantrieb
- 51: Manschetten
- 52: Manschetten
- 55: Antriebsriemenrad
- 57: Antriebseinrichtung
- 58: Behälter
- 59: Saugeinrichtung
- 60: Laserabstandsmesseinrichtung
- 61: Laserstrahl

## Patentansprüche

1. Schweißkopf (20) einer Unterpulverschweißanlage umfassend eine Drahtzuführeinrichtung (30) und eine damit verbundene Pulverbeschickungseinrichtung (40),
**dadurch gekennzeichnet,**
**dass** die Pulverbeschickungseinrichtung (40) relativ zu der Drahtzuführeinrichtung (30) um die Drahtzuführeinrichtung (30) herum verfahrbar am Schweißkopf (20) angeordnet ist.

2. Schweißkopf (20) nach Anspruch 1,
**dadurch gekennzeichnet,**
**dass** die Drahtzuführeinrichtung (30) ein Drahtzuführrohr (31) aufweist, wobei die Pulverbeschickungseinrichtung (40) auf dem Drahtzuführrohr (31) verdrehbar gelagert ist.

3. Schweißkopf (20) nach Anspruch 2,
**dadurch gekennzeichnet,**
**dass** die Pulverbeschickungseinrichtung (40) konzentrisch zu dem Drahtzuführrohr (31) der Drahtzuführeinrichtung (30) einen ringförmigen, auf dem Drahtzuführrohr (31) verdrehbar angeordneten Pulverbehälter (41) mit einem Pulvereinlassstutzen (44) und einem Pulverauslassrohr (45) aufweist, wobei das Pulverauslassrohr (45) neben dem Drahtzuführrohr (31) verläuft.

4. Schweißkopf (20) nach Anspruch 3,
**dadurch gekennzeichnet,**
**dass** der Pulverbehälter (41) mit dem Drahtzuführrohr (31) durch eine elektrisch isolierende Hülse (43) in Verbindung steht.

5. Schweißkopf (20) nach Anspruch 4,
**dadurch gekennzeichnet,**
**dass** die Hülse (43) mit dem Pulverbehälter (41) verbunden ist.

6. Schweißkopf (20) nach einem der Ansprüche 3 bis 5,
**dadurch gekennzeichnet,**
**dass** zur Drehung des Pulverbehälters (41) eine Antriebseinrichtung (57) vorgesehen ist.

7. Schweißkopf (20) nach Anspruch 6,
**dadurch gekennzeichnet,**
**dass** die Antriebseinrichtung (57) einen Riementrieb aufweist.

8. Schweißkopf (20) nach einem der voranstehenden Ansprüche,
**dadurch gekennzeichnet,**
**dass** die Pulverbeschickungseinrichtung (40) eine Absperreinrichtung (47) für das Pulver aufweist.

9. Schweißkopf (20) nach Anspruch 8,
**dadurch gekennzeichnet,**
**dass** die Absperreinrichtung (47) einen in einem Schiebergehäuse (48) gelagerten Schieber (49) umfasst.

10. Schweißkopf (20) nach einem der voranstehenden Ansprüche,
**dadurch gekennzeichnet,**
**dass** die Pulverbeschickungseinrichtung (40) ein Laserabstandsmessgerät (60) aufweist.

11. Unterpulverschweißanlage umfassend ein Gestell (1) mit einem vertikal verfahrbaren, horizontal ausgerichteten Arm (4),
**dadurch gekennzeichnet,**
**dass** durch den Arm (4) der Schweißkopf (20) gemäß mindestens einem der Ansprüche 1 bis 10 entlang der Längsachse des Armes (4) beweglich aufgenommen ist.

12. Unterpulverschweißanlage nach Anspruch 11,
**dadurch gekennzeichnet,**
**dass** der Schweißkopf (20) durch den Arm (4) quer zur Längsachse des Armes horizontal und vertikal beweglich aufgenommen ist.

13. Unterpulverschweißanlage nach Anspruch 11 oder 12,
**dadurch gekennzeichnet,**
**dass** die Unterpulverschweißanlage eine programmierbare Steuerung aufweist, wobei durch die Steuerung nicht nur die Bewegung des Schweißkopfes (20) in horizontaler und vertikaler Richtung entsprechend der Kontur der Schweißnaht steuerbar ist, sondern auch die Drehbewegung der Pulverbeschickungseinrichtung (40) um die Drahtzuführeinrichtung (30) derart, dass in Richtung der Schweißnaht die Pulverbeschickungseinrichtung (40) sich vor der Drahtzuführeinrichtung (30) befindet.

14. Unterpulverschweißanlage nach Anspruch 13,
**dadurch gekennzeichnet,**
**dass** die Steuerung mit der Antriebseinrichtung (57) für den Pulverbehälter (41) in Verbindung steht.

## Claims

1. A welding head (20) of a submerged arc welding facility comprising a wire feed device (30) and a powder feed device (40) connected to it,
**characterized in that**
the powder feed device (40) is disposed on the welding head (20) so as to be displaceable relative to the wire feed device (30) around the wire feed device (30).

2. The welding head (20) according to claim 1,
**characterized in that**
the wire feed device (30) has a wire feed tube (31), wherein the powder feed device (40) is mounted on the wire feed device (31) so as to be pivotable.

3. The welding head (20) according to claim 2,
**characterized in that**
the powder feed device (40) has an annular powder container (41) with a powder inlet port (44) and a powder outlet tube (45), pivotably disposed on the wire feed tube (31) so as to be concentric with the wire feed tube (31) of the wire feed device (30), wherein the powder outlet tube (45) runs next to the wire feed tube (31).

4. The welding head (20) according to claim 3,
**characterized in that**
the powder container (41) is connected to the wire supply tube (31) by an electrically insulating sleeve (43).

5. The welding head (20) according to claim 4,
**characterized in that**
the sleeve (43) is connected to the powder container (41).

6. The welding head (20) according to one of the claims 3 to 5,
**characterized in that**
a drive device (57) is provided for rotating the powder container (41).

7. The welding head (20) according to claim 6,
**characterized in that**
the drive device (57) has a belt drive.

8. The welding head (20) according to one of the afore-mentioned claims,
**characterized in that**
the powder feed device (40) has a shut-off device (47) for the powder.

9. The welding head (20) according to claim 8,
**characterized in that**
the shut-off device (47) comprises a slider (49) mounted in a slider housing (48).

10. The welding head (20) according to one of the afore-mentioned claims,
**characterized in that**
the powder feed device (40) has a laser distance measurement apparatus (60).

11. A submerged arc welding facility comprising a frame (1) with a vertically displaceable horizontally oriented arm (4),
**characterized in that**
the welding head (20) according to at least one of the claims 1 to 10 is received by the arm (4) so as to be displaceable along the longitudinal axis of the arm (4).

12. The submerged arc welding facility according to claim 11,
**characterized in that**
the welding head (20) is received by the arm (4) transversely to the longitudinal axis of the arm so as to be horizontally and vertically displaceable.

13. The submerged arc welding facility according to claim 11 or 12,
**characterized in that**
the submerged arc welding facility has a programmable control system, wherein the control system is not only able to control the movement of the welding head (20) in the horizontal and vertical direction according to the contour of the weld seam, but also the rotational movement of the powder feed device (40) around the wire feed device (30) in such a manner that the powder feed device (40) is located ahead of the wire feed device (30) in the direction of the weld seam.

14. The submerged arc welding facility according to claim 13,
**characterized in that**
the control system is connected to the drive device (57) for the powder container (41).

## Revendications

1. Tête de soudure (20) d'une installation de soudure à poudre sous flux comportant un dispositif d'amenée de fil (30) et une installation associée de revêtement de poudre (40),
**caractérisée en ce que,**
l'installation de revêtement de poudre (40) est solidaire de la tête de soudure (20), et agencée pour être déplacée relativement au dispositif d'amenée de fil (30), autour du dispositif d'amenée de fil (30).

2. Tête de soudure (20) selon la revendication 1,
**caractérisée en ce que,**
le dispositif d'amenée de fil (30) comporte un tube de guidage (31) du fil, ladite installation de revêtement de poudre (40) étant montée de façon rotative sur le tube de guidage (31) du fil.

3. Tête de soudure (20) selon la revendication 2,
**caractérisée en ce que,**
l'installation de revêtement de poudre (40) comprend un réservoir de poudre (41) annulaire, monté en rotation sur le tube de guidage (31) du fil, pourvu d'une tubulure d'entrée de poudre (44) et d'un conduit de sortie de poudre (45), et monté concentriquement par rapport au tube de guidage (31) du fil du dispositif d'amenée de fil (30), dans laquelle le conduit de sortie de poudre (45) s'étant à côté du tube de guidage (31) du fil.

4. Tête de soudure (20) selon la revendication 3,
**caractérisée en ce que,**
le réservoir de poudre (41) est en liaison avec le tube de guidage (31) du fil par une douille (43), isolée électriquement.

5. Tête de soudure (20) selon la revendication 4,
**caractérisée en ce que,**
la douille (43) est en liaison avec le réservoir de poudre (41).

6. Tête de soudure (20) selon l'une des revendications 3 à 5,
**caractérisée en ce que,**
pour la rotation du réservoir de poudre (41), une installation d'entraînement (57) est prévue.

7. Tête de soudure (20) selon la revendication 6,
**caractérisée en ce que,**
l'installation d'entraînement (57) comporte un entraînement à courroie.

8. Tête de soudure (20) selon l'une des revendications précédentes,
**caractérisée en ce que,**
l'installation de revêtement de poudre (40) comporte un dispositif de verrouillage (47) pour la poudre.

9. Tête de soudure (20) selon la revendication 8,
**caractérisée en ce que,**
le dispositif de verrouillage (47) comporte un coulisseau (49) disposé dans un carter à glissière (48).

10. Tête de soudure (20) selon l'une des revendications précédentes,
**caractérisée en ce que,**
l'installation de revêtement de poudre (40) comporte un instrument de mesure de distance à laser (60).

11. Installation de soudure à poudre sous flux, entourant un châssis (1) pourvu d'un bras (4) mobile verticalement et extensible horizontalement,
**caractérisée en ce que,**
par le bras (4), la tête de soudure (20) selon au moins une des revendications 1 à 10 peut être déplacée le long de l'axe longitudinal du bras (4).

12. Installation de soudure à poudre sous flux selon la revendication 11,
**caractérisée en ce que,**
la tête de soudure (20) est portée par le bras (4) et peut se déplacer transversalement par rapport à l'axe longitudinal du bras (4), horizontalement et verticalement.

13. Installation de soudure à poudre sous flux selon l'une des revendications 11 ou 12,
**caractérisée en ce que,**
l'installation de soudure à poudre sous flux comporte une commande programmable, dans laquelle la commande n'est pas uniquement agencée pour assurer les déplacements de la tête de soudure (20) dans les directions horizontale et verticale, correspondant au contour de la ligne de soudure, mais également pour assurer le mouvement de rotation de l'installation de revêtement de poudre (40) autour du dispositif d'amenée de fil (30), de telle manière que, dans la direction de la ligne de soudure, l'installation de revêtement de poudre (40) se trouve devant le dispositif d'amenée de fil (30).

14. Installation de soudure à poudre sous flux selon la revendication 13,
**caractérisée en ce que,**
la commande est en liaison avec l'installation d'entraînement (57) du réservoir de poudre (41).
